# EUROPEAN PATENT SPECIFICATION

(11) **EP 1 101 742 B1**
(45) Date of publication and mention of the grant of the patent: **09.06.2004**
(21) Application number: 00125029.9
(22) Date of filing: 16.11.2000
(51) Int. Cl.: C03B 33/033, B65G 49/06

(54) **System for breaking up notched sheets of glass**
Vorrichtung zum Brechen von geritzten Glasscheiben
Appareil de rompage de feuilles de verre incisées

(30) Priority: 19.11.1999 IT TO991018
(43) Date of publication of application: 23.05.2001
(73) Proprietor: BOTTERO S.p.A., 12010 Cuneo (IT)
(72) Inventor: Bisotto, Sebastiano, 12012 Boves (IT)
(74) Representative: Eccetto, Mauro

(56) References cited:
- EP-A- 0 401 161
- EP-A- 0 550 408
- WO-A-00/34194
- CH-A- 685 199
- US-A- 3 860 125
- US-A- 4 140 258
- US-A- 5 040 342
- US-A- 5 387 068
- PATENT ABSTRACTS OF JAPAN vol. 1995, no. 03, 28 April 1995 (1995-04-28) -& JP 06 340439 A (SHIGIYA SEIKI SEISAKUSHO CO LTD), 13 December 1994 (1994-12-13)

## Description

The present invention relates to a system for breaking up a notched sheet of glass, in particular for producing flat, straight-edged glass articles.

Flat, straight-edged glass articles are normally produced from a sheet of glass, on which a notching head first forms a number of straight notch lines forming angles of or other than 90°. The notched sheet is then broken up along the notch lines to form the articles, which may or may not be the same shape and size, and which may be either stored for future use or transferred on conveyors to follow-up work stations.

Whereas the notching operation is performed in one station, the sheet is normally broken up along the notch lines in successive steps using breakoff systems in which the notched sheet is fed along a path extending through a number of breakoff stations, each having a breakoff device such as a lift-up bar, and through a number of positioning stations, each of which is located upstream from a relative breakoff station to position the breakoff line of the sheet from the previous breakoff station parallel to the lift-up bar of the relative breakoff device. At the last breakoff station, and at least some of the intermediate ones, the breakoff device is associated with an unloading device for unloading the finished or semifinished products formed at the relative breakoff station.

Though widely used, known breakoff systems of the above type are far from satisfactory, mainly on account of being extremely bulky and expensive to produce, set up and maintain. This is mainly due to the particularly long and inevitably zigzag path along which the sheets are fed, and to the fact that flexible systems capable of breaking up sheets with relatively complex notch lines comprise at least four breakoff and conveying stations, at least four breakoff and conveying devices, and two or more unloading devices. All of which breakoff, conveying and unloading devices must, of course, be synchronized, and take a long time to set up at each production change.

It is an object of the present invention to provide a breakoff system designed to eliminate the aforementioned drawbacks, and which at the same time is highly flexible and provides for a high degree of efficiency.

According to the present invention, there is provided a system for breaking up a sheet of glass having a number of straight notch lines forming any angles; the system comprising positioning and breakoff means for breaking up said sheet along said notch lines; and being characterized by comprising a single breakoff station; and in that said positioning and breakoff means comprise a single breakoff device located at said breakoff station and comprising at least one breakoff member having a respective breakoff axis, and a single handling device associated with said single breakoff station to successively position said notch lines parallel to said breakoff axis.

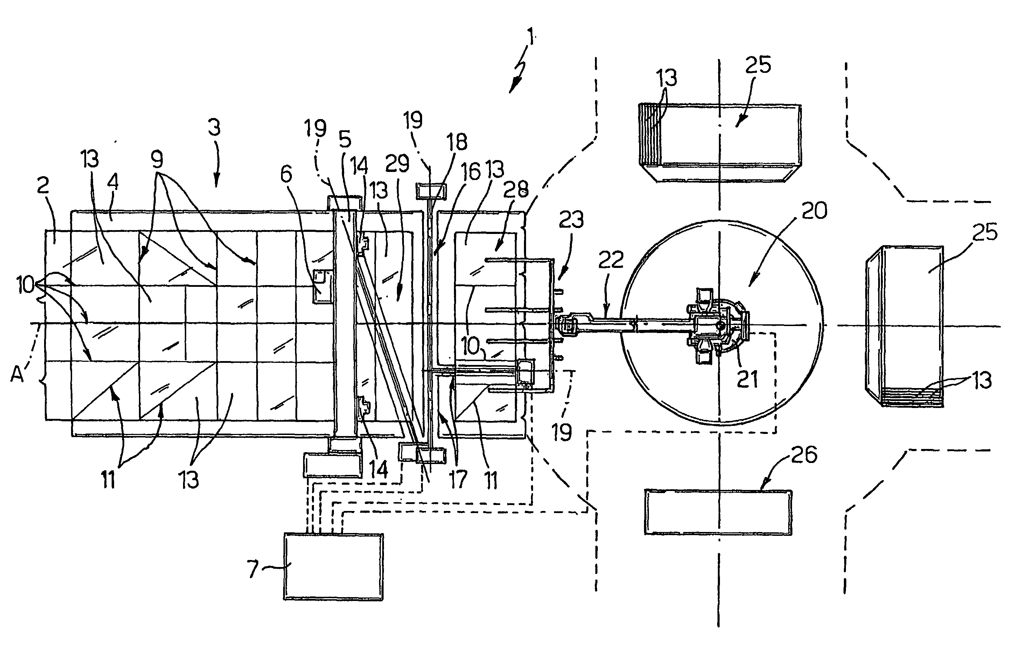

The invention will be described with reference to the accompanying drawing, which shows a schematic top plan view of a preferred, non-limiting embodiment of the breakoff system according to the teachings of the present invention.

Number 1 in the accompanying drawing indicates as a whole a system for breaking up a notched flat sheet 2 of glass. In the example described, sheet 2 is notched on a known notching machine indicated as a whole by 3 and which comprises a table 4 for supporting the sheet 2 of glass to be notched, and a cutting bridge 5 moving over sheet 2 in a direction A and supporting a movable cutting head 6. Cutting bridge 5 and head 6 are controlled by a known control unit 7 to form a number of straight notch lines 9, 10, 11 forming any angles and defining respective straight-edged glass articles 13.

In addition to cutting head 6, cutting bridge 5 also supports two or more gripping heads 14 movable vertically with respect to bridge 5 to and from sheet 2, and comprising respective known gripping members (not shown) - in the example shown, suction cups for positively engaging sheet 2. Gripping heads 14 and cutting bridge 5 are controlled by unit 7 to feed the notched sheet 2 from table 4 to system 1, which comprises a single breakoff station 16 housing a single breakoff device 17, which in turn comprises a number of breakoff bars 18 - three in the example described - having respective axes 19 forming any angles with one another and with direction A.

As shown in the accompanying drawing, system 1 also comprises a single robot handling device 20 having six controlled axes in the example shown, and which is located downstream from breakoff station 16 in the feed direction of sheet 2, is controlled by unit 7, and comprises a base 21 located along direction A, and a telescopic arm 22 extending from base 21 and terminating with a gripping member 23 which can be set to a gripping position to grip sheet 2 fed into breakoff station 16. Handling device 20 is flanked by two storage stations 25 for storing articles 13, and each of which comprises one or more stores for receiving respective articles 13 arranged in orderly manner by handling device 20 according to shape and size. Alongside handling device 20, system 1 also comprises a machining station 26 housing a machining unit (not shown), such as a grinding or drilling assembly, to which some of articles 13 are fed by handling device 20.

Operation of system 1 will now be described as of the condition in which a notched sheet 2 is positioned on table 4, heads 14 engage sheet 2, and cutting bridge 5 is set to a withdrawn pickup position, and assuming, for the sake of simplicity, that sheet 2 is to be broken up first along a notch line 9 perpendicular to direction A.

As of the above condition, bridge 5 is moved towards breakoff station 16 so that a front portion of sheet 2 is fed into the breakoff station and set to a gripping position in which sheet 2 is gripped by handling device 20. At this point, a first notch line 9 is positioned parallel to axis 19 perpendicular to direction A, and bar 18 is then operated to break sheet 2 up into two notched plate portions 28 and 29 located downstream and upstream respectively from axis 19. At this point, if portion 28, commonly known as the crosspiece, is of limited size, portion 29 is maintained stationary, and handling device 20 successively positions the notch lines 10 and 11 on portion 28 parallel to one of axes 19, and then, by holding and maneuvering an end portion of portion 28, breaks off an article 13. If the article 13 retained by gripping member 23 of handling device 20 is not to be worked further, it is transferred by handling device 20 to one or the other of storage stations 25 according to a predetermined storage criterion memorized in control unit 7. Conversely, if the retained article 13 is to be worked further, e.g. ground or drilled, it is fed directly by handling device 20 to station 26. Once article 13 is transferred to any of the above stations, handling device 20 moves gripping member 23 back to breakoff station 16 and, after gripping another end portion of portion 28, breaks off and transfers another article 13 as described above.

Conversely, if portion 28 is fairly large, so that more than the available space is required for it to be handled at station 16, then, before handling device 20 is activated, portion 29 is engaged by gripping heads 14 and withdrawn from station 16 by withdrawing cutting bridge 5, so as to make extra space available at breakoff station 16 in which to manipulate a portion 28 of any size.

Once portion 28 has been broken up, portion 29 is fed forward, is first broken off along another line 9, and then up along the other lines 10 and 11 using the various breakoff bars to form a number of articles 13, which are transferred successively to stations 25 or to station 26 as described above.

Featuring a single breakoff station, where sheet 2 is broken up by a single handling device positioning the various notch lines parallel to the relative breakoff lines, the breakoff system is compact enough to be accommodated in any workplace, as opposed to requiring a specially assigned workplace, as is normally the case with known breakoff systems.

The above characteristics also provide for obtaining highly flexible breakoff systems, which can be set up quickly in the event of production changes, and which, above all, are cheap to produce and maintain. This is mainly due to the systems comprising a small number of components or devices as compared with known systems. More specifically, systems according to the invention comprise no turntables or other conveying and positioning fixtures - which are indispensable in known systems - between each pair of breakoff bars.

The output rate and precision of system 1 as described are comparable with, if not superior to, those of known breakoff systems, mainly on account of the sheet being broken up on the basis of the same data used to form the notch lines and memorized in one control unit 7, which is common to both notching machine 3 and breakoff system 1.

Finally, in system 1 as described, the same handling device provides for breaking off, transferring and inserting the articles inside appropriate supports without the articles ever being released. If the articles are to be worked further, e.g. ground or drilled, the fact that the article is never released by the handling device and is positioned by the handling device itself at the follow-up machining station provides for obtaining articles of extremely accurate dimensions and superior surface finish by eliminating any positioning errors caused by releasing and re-engaging the article between one operation and another.

Clearly, changes may be made to system 1 as described herein without, however, departing from the scope of the present invention. In particular, the sheets may be fed to breakoff station 16 and/or withdrawn using fixtures other than that described, e.g. handling device 20 itself, or conveying belts which may also provide for supporting the sheets.

The various portions 28 may be handled and broken off using handling devices and/or assemblies other than the one described.

Finally, device 17 may comprise a single breakoff bar with which the various notch lines are aligned successively. In which case, system 1 would be even cheaper by comprising one as opposed to the four breakoff bars required by known systems when the breakoff lines form zero or 90° angles. Known systems may even require five or more breakoff bars when even only one notch line forms any angle with the other notch lines.

## Claims

1. A system (1) for breaking up a sheet (2) of glass having a number of straight notch lines (9)(10)(11) forming any angles; the system (1) comprising positioning and breakoff means (5, 18, 20) for breaking up said sheet (2) along said notch lines (9) (10) (11) ; and being **characterized by** comprising a single breakoff station (16); and in that said positioning and breakoff means (5, 18, 20) comprise a single breakoff device (17) located at said breakoff station (16) and comprising at least one breakoff member (18) having a respective breakoff axis (19), and a single handling device (20) associated with said single breakoff station (16) to successively position said notch lines (9)(10)(11) parallel to said breakoff axis (19).

2. A system as claimed in Claim 1, **characterized in that** said single breakoff device (17) comprises a number of said breakoff members (18) all housed in said breakoff station (16); said breakoff members (18) having respective breakoff axes (19) forming any angles.

3. A system as claimed in Claim 1 or 2, **characterized by** also comprising a sheet withdrawal assembly (5) (20) for withdrawing a portion (29) of said sheet (2) located upstream from said breakoff axis (19) in the feed direction of the sheet (2); and means (7) for controlling said withdrawal assembly (5)(20) and activating the withdrawal assembly (5) (20) when the sheet (2) is broken up along at least one (9) of said notch lines (9) (10) (11).

4. A system as claimed in Claim 3, **characterized in that** said withdrawal assembly (5)(20) comprises said handling device (20).

5. A system as claimed in Claim 3 or 4, **characterized in that** said withdrawal assembly (5, 20) comprises gripping means (14) for engaging the notched sheet (2); and a supporting bridge (5) for supporting said gripping means (14) and movable over said sheet (2) and upstream from said breakoff axis (19); said supporting bridge (5) also supporting notching means (6) for notching the sheet (2).

6. A system as claimed in any one of the foregoing Claims, **characterized by** also comprising at least one storage station (25) for storing the glass articles (13) produced and located adjacent to said single breakoff station (16); and handling means (20) for transferring and arranging said glass articles (13) in orderly manner to and in said storage station (25); said handling means comprising said handling device (20).

7. A system as claimed in Claim 6, **characterized by** comprising a number of said storage stations (25); said breakoff station (16) and said storage stations (25) surrounding said handling device (20).

8. A system as claimed in any one of the foregoing Claims, **characterized by** also comprising a machining station (26) for machining at least some of the articles (13); said machining station (26) being located adjacent to said breakoff station (16); and said articles (13) being transferred from the breakoff station (16) to the machining station (26) solely by said handling device (20).

## Patentansprüche

1. System (1) zum Brechen einer Glasscheibe (2), welche eine Anzahl von geraden Ritzlinien (9) (10) (11) hat, die irgendwelche Winkel bilden, wobei das System (1) Positionier- und Zerbrech-Mittel (5, 18, 20) zum Brechen der Scheibe (2) entlang der Ritzlinien (9) (10) (11) aufweist, und wobei es **dadurch kennzeichnet ist, dass** es eine einzige Zerbrech-Station (16) aufweist und dass die Positionier- und Zerbrech-Mittel (5, 18, 20) eine einzige Zerbrech-Vorrichtung (17), welche an der Zerbrech-Station (16) angeordnet ist und welche mindestens ein Zerbrech-Element (18), welches eine jeweilige Zerbrech-Achse (19) hat, und eine einzige Handhabungs-Vorrichtung (20) aufweisen, die mit der einzigen Zerbrech-Station (16) verknüpft ist, um aufeinanderfolgend die Ritzlinien (9) (10) (11) parallel zur Zerbrech-Achse (19) zu positionieren.

2. System gemäß Anspruch 1, **dadurch gekennzeichnet, dass** die einzige Zerbrech-Vorrichtung (17) eine Anzahl von den Zerbrech-Elementen (18) aufweist, die alle in der Zerbrech-Station (16) untergebracht sind, wobei die Zerbrech-Elemente (18) jeweilige Zerbrech-Achsen (19) haben, die irgendwelche Winkel bilden.

3. System gemäß Anspruch 1 oder 2, **dadurch gekennzeichnet, dass** es auch eine Scheiben-Entnahmeeinrichtung (5) (20) zum Entnehmen eines Abschnitts (29) der Scheibe (2), der in der Zuführrichtung der Scheibe (2) stromaufwärts der Zerbrech-Achse (19) angeordnet ist, und Mittel (7) aufweist zum Steuern der Entnahmeeinrichtung (5) (20) und zum Aktivieren der Entnahmeeinrichtung (5) (20), wenn die Scheibe (2) entlang mindestens einer (9) der Ritzlinien (9) (10) (11) zerbrochen ist.

4. System gemäß Anspruch 3, **dadurch gekennzeichnet, dass** die Entnahmeeinrichtung (5) (20) die Handhabungs-vorrichtung (20) aufweist.

5. System gemäß Anspruch 3 oder 4, **dadurch gekennzeichnet, dass** die Entnahmeeinrichtung (5) (20) Greifmittel (14) zum Greifen der geritzten Scheibe (2) und eine Tragbrücke (5) aufweist, welche zum Tragen der Greifmittel (14) vorgesehen ist und welche über die Scheibe (2) bewegbar ist und stromaufwärts der Zerbrech-Achse (19) ist, wobei die Tragbrücke (5) auch Ritzmittel (6) zum Ritzen der Scheibe (2) trägt.

6. System gemäß einem der vorhergehenden Ansprüche, **dadurch gekennzeichnet, dass** es auch mindestens eine Lager-Station (25), welche zum Lagern der erzeugten und benachbart zu der einzigen zerbrech-Station (16) angeordneten Glass-Gegenstände (13) vorgesehen ist, und Handhabungsmittel (20) aufweist zum Transferieren und zum Anordnen der Glas-Gegenstände (13) in geordneter Art und Weise aus der und in die Lager-Station (25), wobei die Handhabungsmittel die Handhabungs-Vorrichtung (20) aufweisen.

7. System gemäß Anspruch 6, **dadurch gekennzeichnet, dass** es eine Anzahl der Lager-Stationen (25) aufweist, wobei die Zerbrech-Station (16) und die Lager-Stationen (25) die Handhabungs-Vorrichtung (20) umgeben.

8. System gemäß einem der vorhergehenden Ansprüche, **dadurch gekennzeichnet, dass** es auch eine Bearbeitungs-Station (26) aufweist zum Bearbeiten mindestens einiger der Gegenstände (13), wobei die Bearbeitungs-Station (26) benachbart zu der Zerbrech-Station (16) angeordnet ist und wobei die Gegenstände (13) einzig von der Handhabungs-vorrichtung (20) aus der Zerbrech-Station (16) zu der Bearbeitungs-Station (26) transferiert werden.

## Revendications

1. Appareil (1) pour fragmenter une feuille (2) de verre comportant plusieurs lignes d'entaille droites (9) (10) (11) formant n'importe quels angles; l'appareil (1) comprenant des moyens de cassage et de positionnement (5, 18, 20) pour fragmenter ladite feuille (2) le long desdites lignes d'entailles (9) (10) (11); et étant **caractérisé en ce qu'**il comprend une station de cassage unique (16); et **en ce que** lesdits moyens de cassage et de positionnement (5, 18, 20) comprennent un dispositif de cassage unique (17) disposé à ladite station de cassage (16) et comprenant au moins un élément de cassage (18) ayant un axe de cassage (19), et un dispositif de manipulation unique (20) associé à ladite station de cassage unique (16) pour positionner successivement lesdites lignes d'entaille (9) (10) (11) parallèlement audit axe de cassage (19).

2. Appareil tel que revendiqué dans la revendication 1, **caractérisé en ce que** ledit dispositif de cassage unique (17) comprend plusieurs desdits éléments de cassage (18) tous logés dans ladite station de cassage (16) ; lesdits éléments de cassage (18) ayant des axes de cassage respectifs (19) formant n'importe quels angles.

3. Appareil tel que revendiqué dans la revendication 1 ou 2, **caractérisé en ce qu'**il comprend également un ensemble d'évacuation de feuille (5) (20) pour évacuer une partie (29) de ladite feuille (2) disposée en amont dudit axe de cassage (19) dans la direction d'alimentation de la feuille (2); et des moyens (7) pour commander ledit ensemble d'évacuation (5) (20) et mettre en marche cet ensemble d'évacuation (5) (20) lorsque la feuille (2) est cassée le long d'au moins une (9) desdites lignes d'entaille (9) (10) (11).

4. Appareil tel que revendiqué dans la revendication 3, **caractérisé en ce que** ledit ensemble d'évacuation (5) (20) comprend ledit dispositif de manipulation (20).

5. Appareil tel que revendiqué dans la revendication 3 ou 4, **caractérisé en ce que** ledit ensemble d'évacuation (5, 20) comprend des moyens de préhension (14) pour saisir la feuille entaillée (2); et un pont de support (5) pour supporter lesdits moyens de préhension (14) mobile au-dessus de ladite feuille (2) et en amont dudit axe de cassage (19); ledit pont de support (5) supportant également des moyens d'entaillage (6) pour entailler la feuille (2).

6. Appareil tel que revendiqué dans l'une quelconque des revendications précédentes, **caractérisé en ce qu'**il comprend également au moins une station de stockage (25) pour stocker les objets en verre (13) produits et disposés adjacents à ladite station de cassage unique (16); et des moyens de manipulation (20) pour transférer et arranger lesdits objets en verre (13) de manière ordonnée à et dans ladite station de stockage (25); lesdits moyens de manipulation comprenant ledit dispositif de manipulation (20).

7. Appareil tel que revendiqué dans la revendication 6, **caractérisé en ce qu'**il comprend plusieurs desdites stations de stockage (25); ladite station de cassage (16) et lesdites stations de stockage (25) entourant ledit dispositif de manipulation (20).

8. Appareil tel que revendiqué dans l'une quelconque des revendications précédentes, **caractérisé en ce qu'**il comprend également une station d'usinage (26) pour usiner au moins une partie des objets (13) ; ladite station d'usinage (26) étant disposée adjacente à ladite station de cassage (16); et lesdits objets (13) étant transférés de ladite station de cassage (16) à ladite station d'usinage (26) uniquement par ledit dispositif de manipulation (20).
